# EUROPÄISCHE PATENTSCHRIFT

(11) **EP 3 109 096 B1**
(45) Veröffentlichungstag und Bekanntmachung des Hinweises auf die Patenterteilung: **07.10.2020**
(21) Anmeldenummer: 16175111.0
(22) Anmeldetag: 17.06.2016
(51) Int. Cl.: B60R 1/06, B60R 1/00, B60R 1/10, B60R 1/12, H04N 5/225, H04N 5/232, H04N 7/18, B60R 11/04

(54) **ANZEIGEEINRICHTUNG FÜR FAHRZEUGE, INSBESONDERE NUTZFAHRZEUGE**
DISPLAY APPARATUS FOR VEHICLES, IN PARTICULAR FOR COMMERCIAL VEHICLES
DISPOSITIF D'AFFICHAGE POUR VÉHICULES, NOTAMMENT VÉHICULES UTILITAIRES

(30) Priorität: 23.06.2015 DE 102015008042
(43) Veröffentlichungstag der Anmeldung: 28.12.2016
(73) Patentinhaber: MEKRA LANG GmbH & Co. KG, 91465 Ergersheim (DE)
(72) Erfinder: LANG, Werner, 91465 Ergersheim (DE); WITZKE, Michael, 91580 Petersaurauch (DE); GEISSENDÖRFER, Peter, 91605 Gallmersgarten (DE); HEGER, Sebastian, 91478 Markt Nordheim (DE); DEFFNER, Simon, 91604 Flachslanden (DE); SNEL, Jaap-Jan, 91465 Ergersheim (DE)
(74) Vertreter: Kramer Barske Schmidtchen Patentanwälte PartG mbB

(56) Entgegenhaltungen:
- EP-A1- 1 725 035
- DE-A1- 10 109 665
- DE-A1- 19 741 896
- DE-A1- 19 932 779
- DE-A1-102004 017 143
- DE-A1-102012 219 810
- DE-T2-602004 000 387
- US-A1- 2005 256 395

## Beschreibung

Die vorliegende Erfindung betrifft eine Anzeigeeinrichtung für Fahrzeuge, insbesondere Nutzfahrzeuge, und insbesondere eine Anzeigeeinrichtung mit einer Bildaufnahmeeinheit zur Verwendung an Nutzfahrzeugen.

Bei Kraftfahrzeugen sind abhängig von dem Typ des Kraftfahrzeugs, wie beispielsweise Krafträdern, Kraftfahrzeugen zur Personenbeförderung, Kraftfahrzeugen zur Güterbeförderung, usw. sogenannte Sichtfelder gesetzlich vorgegeben, welche durch eine Einrichtung für indirekte Sicht abgebildet werden müssen und durch den auf einem Fahrersitz sitzenden Fahrer jederzeit über die Einrichtung für indirekte Sicht einsehbar sein müssen. Gewöhnlicher Weise werden die Einrichtungen für indirekte Sicht durch Spiegel gebildet.

In letzter Zeit werden solche Einrichtungen für indirekte Sicht zunehmend durch Kameras bzw. Bildaufnahmeeinheiten ersetzt und/oder ergänzt, die derart ausgebildet sind, dass eine außen am Fahrzeug angebrachte Kamera ein Bild von der Umgebung des Fahrzeugs aufnimmt und das Bild, ggf. nach Bildbearbeitung, auf einer im Innenraum des Fahrzeugs angebrachten Wiedergabeeinheit für den Fahrer einsehbar dargestellt wird.

Derzeit sind solche Kameras bzw. Bildaufnahmeeinheiten fest oder lösbar meist unmittelbar an der Fahrzeugkarosserie montiert, d. h. sie stehen nicht oder kaum von der Fahrzeugkarosserie vor. Wenn eine Kamera derart am Fahrzeug angebracht ist, ist es jedoch ohne die Verwendung von Bildaufnahmeeinheiten mit verhältnismäßig starkem Weitwinkel kaum möglich, mit ähnlichen Blickwinkeln, die der Fahrer beim Blick in einen herkömmlichen Seitenspiegel haben würde, seitliche Sichtbereiche neben dem Fahrzeug zu erfassen. Gerade im Bereich von Nutzfahrzeugen ist es jedoch wünschenswert, auf der Fahrerseite und der Beifahrerseite jeweils einen ebenen und horizontalen Teil der Fahrbahn von bestimmter Breite einsehbar zu machen, der sich ab einer festgelegten Entfernung hinter den Augenpunkten des Fahrzeugführers bis zum Horizont erstreckt. Die Breite dieses Streifens entspricht bei der Verwendung von herkömmlichen Spiegeln in einer festgelegten Entfernung hinter den Augenpunkten des Fahrzeugführers dem Sichtfeld eines Weitwinkelspiegels, in kürzerer Entfernung hinter den Augenpunkten des Fahrzeugführers dem Sichtfeld eines Hauptspiegels, dessen vorgegebene einsehbare Breite, d. h. Erstreckung in Fahrzeugquerrichtung, geringer als die des Weitwinkelspiegels ist. Solche Sichtbereiche mit unmittelbar am Fahrzeug angebrachten Kamerasystemen abzubilden, ist schwierig. Grundsätzlich können die relevanten Bereiche rund um ein Fahrzeug meist besser mittels Kamerasystemen aufgenommen werden, wenn diese in einem Abstand zum Fahrzeug, z. B. seitlich auskragend bzw. von der Fahrzeugaußenfläche vorstehend, angebracht sind.

Darüber hinaus ist bei Nutzfahrzeugen der Ersatz von herkömmlichen Spiegeln durch Kamerasysteme zwar insofern strömungstechnisch günstig und sich vorteilhaft auf den Kraftstoffverbrauch auswirkend, dass die Umströmung des Fahrzeugs nicht durch ab- oder vorstehende Spiegel negativ beeinflusst wird. Allerdings werden in letzter Zeit Spiegel auch gezielt geformt, um bestimmte Strömungsverhältnisse, die sich günstig auf den Kraftstoffverbrauch auswirken, auszulösen. Bei einer unmittelbar an der Fahrzeugkarosserie angebrachten Spiegelersatzsystem-Kamera fällt die Möglichkeit dieser gezielten Umströmungsbeeinflussung um das Fahrzeug weg.

Andererseits ist es bei Vorsehen von abstehenden Halterungen für ein Kamera-Monitor-System eines Fahrzeugs, das die Kamera und insbesondere deren Bildaufnahmeeinheit aufnimmt, zum Erreichen von optimaler Sicht und Ausrichtung der Kamera ggf. wünschenswert, diese an einem vom auf dem Fahrersitz sitzenden Fahrer nicht oder nur schlecht direkt (oder auch indirekt) einsehbaren Ort am Fahrzeug anzubringen. Dies bedeutet, dass die Halterung der Bildaufnahmeeinheit ggf. bei bestimmten Fahrmanövern für den Fahrer nicht direkt sichtbar ist und somit, insbesondere dann, wenn der Befestigungsort der Kamera vom Fahrzeug weit herausragt und somit nicht mit den üblichen Umrissen des Fahrzeugs deckungsgleich ist, die Gefahr der Kollision mit der Umgebung oder anderen Verkehrsteilnehmern birgt.

DE 60 2004 000 387 T2 betrifft eine Fahrzeugbildanzeigevorrichtung, die mit einer Kamera zum Anzeigen von Bildern der Umgebung des Fahrzeugs, die von der Kamera aufgenommen werden, auf einer Anzeigeeinrichtung ausgestattet ist, die auf einem beweglichen Abschnitt, beispielsweise einem äußeren Spiegel oder Ähnlichem eines Fahrzeugs angeordnet ist.

DE 10 2004 017 143 A1 betrifft eine Hinderniserfassungseinrichtung, die imstande ist, ein Hindernis im blinden Winkel eines Fahrzeugs mit einer einfachen Einrichtung zu prüfen.

DE 10 2012 219 810 A1 betrifft ein Verfahren und eine Vorrichtung zum Betreiben eines Fahrzeugs, das einen Außenspiegel aufweist, an dem eine Kamera angeordnet ist und der mittels einer Schwenkvorrichtung zwischen einer ersten Endstellung und einer zweiten Endstellung schwenkbar ist.

DE 199 32779 A1 betrifft eine Rückfahrhilfe zur Unterstützung des Fahrers eines Kraftfahrzeugs, um dem Fahrer zuverlässige Information über die jeweilige räumliche Anordnung von im hinteren Gefahrenraum befindlichen Objekten relativ zum Fahrzeug zu liefern.

DE 10109665 A1 betrifft ein Verfahren zur Darstellung der rückwärtigen Umgebung eines Kraftfahrzeugs auf einem Bildschirm.

EP 1725035 A1 betrifft ein Bildverarbeitungsverfahren mit einem Hindernisdetektor, der ein Signal erzeugen kann, das ein sich dem Fahrzeug näherndes Hindernis anzeigen kann.

US 2005/256395 A1 betrifft ein Kalibrierungsverfahren für eine Bildgebungsvorrichtung.

Zum Schutz der Kamera bzw. Bildaufnahmeeinheit ist beispielsweise aus der DE 10 2012 015 395 B3 ein Kameraarm für eine Spiegelersatzsystem-Kamera eines Kraftfahrzeugs bekannt, der ein erstes Gehäuseelement und ein zweites Gehäuseelement aufweist. Das erste Gehäuseelement nimmt eine Bildaufnahmeeinheit der Spiegelersatzsystem-Kamera auf und das zweite Gehäuseelement ist angepasst, lagefest mit der Karosserie des Kraftfahrzeugs verbunden zu werden. Zwischen dem ersten Gehäuseelement und dem zweiten Gehäuseelement ist ein Schwenkmechanismus vorgesehen, so dass das erste Gehäuseelement relativ zum zweiten Gehäuseelement um eine Schwenkachse schwenkbar ist. Bei einer Kollision mit einem Hindernis klappt das erste Gehäuseelement relativ zum zweiten Gehäuseelement ein, so dass die verhältnismäßig teure Kameraeinheit im ersten Gehäuseelement nicht beschädigt wird und den Aufprall nicht absorbiert.

Davon ausgehend ist es Aufgabe der Erfindung eine Anzeigeeinrichtung für Fahrzeugumgebungsbereiche eines Fahrzeugs, insbesondere Nutzfahrzeugs, bereitzustellen, die eine optimale Sicht der Bildaufnahmeeinheit für das jeweils geforderte oder gewünschte Sichtfeld ermöglicht und derart gestaltet ist, dass einer Kollision der Bildaufnahmeeinheit und des Gehäuses mit Hindernissen vorgebeugt wird.

Diese Aufgabe wird mit einer Anzeigeeinrichtung mit den Merkmalen des Anspruchs 1 gelöst. Bevorzugte Ausführungsformen sind in den abhängigen Ansprüchen angegeben.

Der Erfindung liegt der Gedanke zugrunde, eine Anzeigeeinrichtung für Fahrzeugumgebungsgebereiche vorzusehen, die mindestens eine Bildaufnahmeeinheit, eine Verarbeitungseinheit und eine Wiedergabeeinheit aufweist. Die Bildaufnahmeeinheit ist dabei am Fahrzeug in einem vom Fahrzeug nach außen vorstehenden Gehäuse angeordnet. Das Gehäuse ragt vom Fahrzeug deutlich bzw. weit heraus, zumeist in seitlicher Richtung des Fahrzeugs, d.h. im Wesentlichen senkrecht zur Fahrzeugmittelebene des Fahrzeugs, die in Vorwärts-RückwärtsRichtung des Fahrzeugs verläuft. Dies ermöglicht es, die Bildaufnahmeeinheit derart bezüglich des Fahrzeugs anzuordnen, dass die Bildaufnahmeeinheit optimale Sicht auf den von ihr zu erfassenden Bereich hat, beispielsweise bei einem Nutzfahrzeug das Sichtfeld eines Hauptspiegels (Sichtfeld II gemäß ECE Richtlinie R 46) und/oder eines Weitwinkelspiegels (Sichtfeld IV gemäß ECE Richtlinie R 46). Dies ist durch den Abstand zum Fahrzeug möglich, der durch das auskragende bzw. vorstehende Gehäuse bereitgestellt wird, das eine deutliche Erstreckung weg von einer Fahrzeugaußenfläche, insbesondere in der Richtung senkrecht zur Fahrzeugmittelebene, hat.

Durch das weite Herausragen bzw. Vorstehen des Gehäuses bzw. eines Kameraarms bezüglich des Fahrzeugs und in Abhängigkeit von dessen Anbringposition am Fahrzeug ist ggf. eine direkte Sicht auf das Gehäuse nicht bzw. nur schwer möglich. Beispielsweise ist das Gehäuse oberhalb der Augpunkte und/oder hinter den Augpunkten eines Fahrers am Fahrzeug oder an einer anderen nicht oder nur schlecht vom auf dem Fahrersitz sitzenden Fahrer direkt einsehbaren Stelle angebracht, z. B. je nach Lage auch unterhalb der Augpunkte. Deshalb weist die erfindungsgemäße Anzeigeeinrichtung zusätzlich ein Erfassungsmittel für die Position der Bildaufnahmeeinheit auf, das dem Fahrer ohne Weiteres ermöglicht, die Position der Bildaufnahmeeinheit relativ zur Fahrzeugumgebung zu erkennen, d. h. ohne dass der Fahrer sich von seiner normalen Sitzposition wegbewegen muss oder stark von der seiner direkten bzw. indirekten Sicht auf den Straßenverkehr abgelenkt wird. Insbesondere kann das Erfassungsmittel dem Fahrer des Fahrzeugs die Position der Bildaufnahmeeinheit beispielsweise relativ zu einem Hindernis für die Bildaufnahmeeinheit anzeigen, so dass eine Kollision mit demselben verhindern werden kann. Dem Fahrer wird so ermöglicht, in ggf. kollisionsgefährdeten Situationen die Lage und Position der Bildaufnahmeeinheit relativ zu einem Hindernis abzuschätzen bzw. zu überprüfen, und so seine Fahrmanöver ggf. anzupassen und eine Kollision zu vermeiden.

Somit bietet die erfindungsgemäße Anzeigeeinrichtung nicht nur optimale Voraussetzungen, die Bildaufnahmeeinheit derart bezüglich des Fahrzeugs zu positionieren, dass die gewünschten einsehbaren Bereiche zuverlässig erfasst werden können, sondern ermöglicht auch, dass Kollisionen der Bildaufnahmeeinheit mit einem Hindernis vermieden werden können, insbesondere da die Bildaufnahmeeinheiten kostenintensiv sind und somit bei einer Beschädigung aufwändig auszutauschen sind. Wird die Bildaufnahmeeinheit im Rahmen eines Spiegelersatzsystems verwendet, müsste zudem bei einer Beschädigung ein unmittelbarer Austausch bzw. Reparatur vorgenommen werden, da anderenfalls das Fahrzeug die Anforderungen an Verkehrssicherheit nicht mehr erfüllt, so dass ggf. Stillstandzeiten des Fahrzeugs auftreten.

Nach einer bevorzugten Ausführungsform ist die Bildaufnahmeeinheit in einem von einer Fahrzeugseite, insbesondere seitlich, vorstehenden Gehäuse angeordnet. Somit kann die Bildaufnahmeeinheit die gesetzlich vorgeschriebenen Sichtfelder, beispielsweise die Sichtfelder II und/oder IV gemäß ECE Richtlinie R 46, wie gewünscht dauerhaft und zuverlässig erfassen und z. B. als Spiegelersatzsystem für einen Haupt- und/oder Weitwinkelspiegel verwendet werden. In einer beispielhaften Ausgestaltung ist das Gehäuse, in dem die Bildaufnahmeeinheit untergebracht ist, derart am Fahrzeug vorstehend angeordnet, dass das Gehäuse samt der Bildaufnahmeeinheit nicht im (direkten) Sichtbereich des Fahrers des Fahrzeugs liegt. In einer alternativen Ausgestaltung jedoch kann das Gehäuse teilweise im Sichtbereich des Fahrers des Fahrzeugs angeordnet sein, bzw. bei einer entsprechenden Bewegung des Fahrers in dessen Sichtbereich gelangen.

Vorzugsweise ist das Erfassungsmittel von der Bildaufnahmeeinheit räumlich getrennt außen am Fahrzeug angeordnet, d. h. dass sich das Erfassungsmittel nicht in oder an dem Gehäuse befindet, in dem die Bildaufnahmeeinheit angeordnet ist. Es können z. B. zwei getrennte, voneinander beabstandete Gehäuse vorgesehen sein. In einem Beispiel ist das Erfassungsmittel unmittelbar am Fahrzeug angebracht. Somit kann gewährleistet werden, dass das Erfassungsmittel zuverlässig die Position der Bildaufnahmeeinheit relativ zur Fahrzeugumgebung erkennen kann und selbst kollisionsunanfällig ist.

Alternativ kann es aber möglich sein, das Erfassungsmittel am Gehäuse, in dem die Bildaufnahmeeinheit angeordnet ist, vorzusehen. Die Bildaufnahmeeinheit und das Erfassungsmittel können also z. B. ein gemeinsames Gehäuse aufweisen und darin weiter vorteilhaft unmittelbar benachbart angeordnet sein. Dies kann bei der Erfassung von Entfernungsinformation zwischen der Bildaufnahmeeinheit bzw. dem Gehäuse und einem in der Fahrzeugumgebung befindlichen Hindernis für die Bildaufnahmeeinheit vorteilhaft sein, da die Entfernungsinformation damit genauer erfasst werden kann.

Das Erfassungsmittel weist in einer bevorzugten Ausgestaltung eine Einrichtung zur indirekten Sicht auf, die ein vom Fahrer des Nutzfahrzeugs einsehbares Bild der Bildaufnahmeeinheit und deren unmittelbarer Umgebung erfasst. Mit Hilfe der Einrichtung zur indirekten Sicht auf die Bildaufnahmeeinheit kann der Fahrer des Fahrzeugs die Entfernung bzw. den Abstand der Bildaufnahmeeinheit zu einem Hindernis zuverlässig und dauerhaft überwachen und dementsprechend das Fahrzeug derart steuern, dass eine Kollision der Bildaufnahmeeinheit mit dem Hindernis vermieden werden kann. Insbesondere ist dies bei Rangier- und Einparkvorgängen vorteilhaft.

Beispielsweise weist die Einrichtung zur indirekten Sicht eine Kameraeinrichtung und/oder eine Spiegeleinrichtung auf, mittels derer die Position der Bildaufnahmeeinheit relativ zur Fahrzeugumgebung erkannt und überwacht werden kann. Die Einrichtung zur indirekten Sicht ist dabei derart angeordnet, dass diese die Bildaufnahmeeinheit und das Gehäuse, in dem die Bildaufnahmeeinheit vom Fahrzeug beabstandet angeordnet ist, jeweils zumindest teilweise erfasst. Ist die Einrichtung zur indirekten Sicht eine Kameraeinrichtung, so ist zusätzlich eine Auswerte- oder Wiedergabeeinheit als Ausgabemittel für die Bilddaten bzw. aus den Bilddaten gewonnener Information im Wahrnehmungsbereich des Fahrers vorgesehen. Die Bilddaten können entweder unbearbeitet und/oder unausgewertet dargestellt werden, oder sie können durch Bilddatenanalyse ausgewertet und nur die daraus gewonnene Information, z. B. in Form eines Warntons bei zu starker Annäherung an ein Hindernis, ausgegeben werden.

Die Einrichtung zur indirekten Sicht ist vorzugsweise derart am Fahrzeug, insbesondere Nutzfahrzeug, angebracht, dass zusätzlich ein gesetzlich vorgeschriebenes Sichtfeld rund um ein Nutzfahrzeug zumindest teilweise erfasst wird. Demzufolge kann mit der Einrichtung zur indirekten Sicht einerseits die Position der Bildaufnahmeeinheit relativ zur Fahrzeugumgebung erkannt werden und andererseits dem Fahrer des Nutzfahrzeugs zusätzlich Einblick in ein gesetzlich vorgeschriebenes Sichtfeld ermöglicht werden, beispielsweise in das Sichtfeld eines Rampenspiegels (Sichtfeld V gemäß ECE Richtlinie R 46) und/oder in das Sichtfeld eines Frontspiegels (Sichtfeld VI gemäß ECE Richtlinie R 46).

In einer bevorzugten Ausgestaltung ist die Einrichtung zur indirekten Sicht eine Kameraeinrichtung, deren aufgenommene Bildinformation zur Verarbeitung und Darstellung an die Verarbeitungseinheit und die vom Fahrer des Nutzfahrzeugs einsehbare Wiedergabeeinheit übermittelt wird. Alternativ kann die Bildinformation des Erfassungsmittels auch auf einer separaten Wiedergabeeinheit, die von der Wiedergabeeinheit für die Bilddaten der Bildaufhahmeeinheit getrennt ist, ausgegeben werden. Die von der Kameraeinrichtung aufgenommene Bildinformation kann beispielsweise derart verarbeitet werden, dass auf den von der Kameraeinrichtung erfassten Bildern die zu überwachende Bildaufnahmeeinheit graphisch hervorgehoben wird, beispielsweise mittels graphischer Markierungen und/oder Symbole. Alternativ oder zusätzlich kann die auf den von der Kameraeinrichtung erfassten Bildern enthaltene Bildaufnahmeeinheit mittels Bildbearbeitung hervorgehoben werden, beispielsweise durch Einfärbung, Kontraständerung, Änderung der Bildschärfe, Änderung der Luminanz und/oder Änderung der Transparenz.

Alternativ oder zusätzlich, insbesondere wenn die Einrichtung zur indirekten Sicht eine Kameraeinrichtung ist, kann deren aufgenommene Bildinformation zur Verarbeitung an ein von der hierin vorgeschlagenen Anzeigeeinrichtung getrenntes System übermittelt wird. Beispielsweise ist ein solches getrenntes System ein bereits am Fahrzeug vorhandenes Fahrerassistenzsystem, das eine Wiedergabeeinheit aufweisen kann, mittels der die von der Kameraeinrichtung erfassten und verarbeiteten Bilddaten an den Fahrer ausgegeben werden. Alternativ kann die Information an eine Fahrzeugsteuerung übermittelt werden und Eingang in die Steuerung des Fahrzeugs sein. Schließlich kann z. B. auch ein von der Anzeigeeinrichtung getrenntes System in der Form einer eigenen Wiedergabeeinheit vorgesehen sein, das die Daten des Erfassungsmittels nach Bedarf, d. h. beispielsweise in dafür kritischen Fahrsituationen, darstellt und eine eigene Verarbeitungseinheit besitzt.

Zudem kann die Einrichtung zur indirekten Sicht dazu ausgebildet sein, die erfasste Bildinformation dem Fahrer des Fahrzeugs unmittelbar zu übermitteln. Beispielsweise ist die Einrichtung zur indirekten Sicht ein Spiegel, der derart am Fahrzeug angebracht ist, dass der Fahrer des Fahrzeugs über den Spiegel eine Sicht auf die Bildaufnahmeeinheit erhält.

Die die Bilder der Kameraeinrichtung verarbeitende Verarbeitungseinheit kann in einer erfindungsgemäßen Ausführung dazu angepasst sein, einen Fahrzeugbezug in das auf der Wiedergabeeinheit angezeigte und die Bildaufnahmeeinheit enthaltene Bild zu überblenden. Durch den eingeblendeten Fahrzeugbezug kann sich der Fahrer des Fahrzeugs schnell orientieren und somit die Position der Bildaufnahmeeinheit relativ zur Fahrzeugumgebung und zum Fahrzeug einfach erkennen. Alternativ kann die Kameraeinrichtung derart ausgerichtet sein, dass zumindest teilweise das Fahrzeug erfasst wird und die Verarbeitungseinheit ist dazu angepasst, den erfassten Fahrzeugabschnitt zumindest teilweise auf dem Wiedergabebild als Fahrzeugbezug anzeigen zu lassen.

In einer bevorzugten Ausgestaltung ist das Erfassungsmittel ferner dazu ausgebildet, Entfernungsinformation zwischen der Bildaufnahmeeinheit und einem in der Fahrzeugumgebung befindlichen Hindernis für die Bildaufnahmeeinheit zu erfassen bzw. zu ermitteln, z. B. aus Bilddaten. Das Erfassen der Entfernungsinformation kann z. B. mit einem separaten Abstandssensor erfolgen oder z. B. durch Auswertung von Bilddaten, d. h. ohne gesonderten Sensor. Ist ein Abstandssensor vorgesehen, so kann dieser das Erfassungsmittel bilden oder zusätzlich zu einem anderen Erfassungsmittel vorgesehen sein. Die Entfernungsinformation kann dann z. B. graphisch in das dem Fahrer des Fahrzeugs dargestellte Wiedergabebild eingeblendet werden, ein Warnsignal, wie z. B. ein Warnton, kann bei Unterschreiten einer bestimmten Entfernung an den Fahrer ausgegeben werden, und/oder die Entfernungsinformation kann an die Fahrzeugsteuerung zur weiteren Verarbeitung übermittelt werden. Die Fahrzeugsteuerung kann in Abhängigkeit von der Entfernungsinformation einen Eingriff in die Fahrzeugsteuerung vornehmen. Beispielsweise ein automatisches Bremsen veranlassen. Außerdem kann die Entfernungsinformation von der Fahrzeugsteuerung weiter verarbeitet werden, beispielsweise kann die Entfernungsinformation für ein Einparksystem des Fahrzeugs verwendet werden. In einer alternativen Ausgestaltung kann das Erfassungsmittel dazu angepasst sein, die Entfernungsinformation erst dann an die Fahrzeugsteuerung zu übermitteln, wenn die Entfernungsinformation einen Wert anzeigt, der einen kritischen Wert unterschreitet.

Das Erfassungsmittel sendet beim Übermitteln der Entfernungsinformation ein Signal, das die die Entfernungsinformation anzeigt und die Fahrzeugsteuerung dazu veranlasst, mittels eines Fahrerassistenzsystems in die Fahrparameter des Fahrzeugs einzugreifen. Die Fahrparameter umfassen beispielsweise die Geschwindigkeit des Fahrzeugs, den Betätigungsgrad der Bremse und den Lenkwinkel des Fahrzeugs. Der Eingriff in die Fahrparameter kann weiterhin abhängig von anderen Fahrparametern bzw. der Fahrsituation des Fahrzeugs sein, wobei die Fahrsituation z. B. mittels weiterer Fahrzeugsensoren, wie einem Lenkwinkelsensor, einem Geschwindigkeitssensor, einem Bremssensor und Ähnlichem, erfasst werden kann.

In einer Ausgestaltung weist das Erfassungsmittel einen Sensor auf, der dazu ausgebildet ist, Entfernungsinformation zwischen der Bildaufnahmeeinheit und einem in der Fahrzeugumgebung befindlichen Hindernis für die Bildaufnahmeeinheit zu erfassen und, wenn nötig, an die Fahrzeugsteuerung zu liefern. Der Sensor ist beispielsweise ein Radarsensor oder ein Infrarotsensor zum Erfassen der Entfernungsinformation. Der Sensor kann räumlich getrennt von der Bildaufnahmeeinheit am Fahrzeug angebracht sein. Alternativ kann der Sensor am äußersten Ende des vom Fahrzeug vorstehenden Gehäuses, in dem die Bildaufnahmeeinheit angeordnet ist, angebracht sein, damit die Entfernungsinformation zuverlässig und genau erfasst werden kann.

Die Fahrzeugsteuerung kann in Abhängigkeit der Entfernungsinformation vom Erfassungsmittel ein optisches Signal, beispielsweise in Form von graphischen Einblendungen, auf dem Wiedergabebild auf der Wiedergabeeinheit, ein akustisches Signal, beispielsweise in Form von Warntönen in der Fahrerkabine, und/oder ein haptisches Signal, beispielsweise in Form einer Vibration des Lenkrads, an den Fahrer ausgeben. Durch das an den Fahrer des Fahrzeugs ausgegebene Signal kann dieser frühzeitig auf das Hindernis für die Bildaufnahmeeinheit hingewiesen und somit eine Kollision der Bildaufnahmeeinheit und des vorstehenden Gehäuses mit dem Hindernis verhindert werden.

Alternativ oder zusätzlich weist das Erfassungsmittel ein an der Bildaufnahmeeinheit und/oder in definierter geometrischer Beziehung zur Bildaufnahmeeinheit angebrachtes Hinweisbauteil auf, das vom Fahrer des Fahrzeugs zumindest teilweise einsehbar ist. Dies ist insbesondere dann vorteilhaft, wenn die Bildaufnahmeeinheit und/oder das vom Fahrzeug vorstehende Gehäuse, in dem die Bildaufnahmeeinheit angeordnet ist, vom Fahrer des Fahrzeugs nicht oder nur schwer einsehbar und somit teilweise außerhalb des Sichtbereichs des Fahrers des Fahrzeugs liegt. Mit Hilfe des Hinweisbauteils kann der Fahrer die Position der Bildaufnahmeeinheit relativ zur Fahrzeugumgebung erkennen. Beispielsweise ist das Hinweisbauteil ein Winglet, ein Vorsprung, eine Finne und/oder jedes sonstige Bauteil, das auf die Bildaufnahmeeinheit hinweisen kann. Der Fahrer kann dann mittels direkter Sicht auf das Hinweisbauteil in bestimmten kritischen Fahrsituationen die Lage und die Position der Bildaufhahmeeinheit erkennen und überprüfen.

In einer weiteren erfindungsgemäßen Ausführungsform weist das Erfassungsmittel eine derart relativ zur Bildaufnahmeeinheit platzierte Lichtquelle, beispielsweise eine LED, auf, die dazu ausgebildet ist, eine Markierung auf ein Hindernis für die Bildaufnahmeeinheit in der Fahrzeugumgebung zu projizieren. Die Markierung auf dem Hindernis ermöglicht dem Fahrer des Fahrzeugs eine Abschätzung der Position der Bildaufnahmeeinheit relativ zum Hindernis. Die Lichtquelle ist bevorzugt am vom Fahrzeug vorstehenden Gehäuse angebracht und derart ausgerichtet, dass ein Lichtkegel in Vorwärtsfahrtrichtung des Fahrzeugs ausgesandt wird. Vorzugsweise ist die Lichtquelle am äußeren Ende des vorstehenden Gehäuses angeordnet und derart ausgerichtet, dass eine äußere Begrenzung des Lichtkegels parallel zur Fahrzeugmittelebene ist und mit dem äußeren Ende des vorstehenden Gehäuses fluchtet, so dass die äußere Begrenzung des Lichtkegels gleichzeitig das äußere Ende des vorstehenden Gehäuses, in dem die Bildaufnahmeeinheit angeordnet ist, anzeigt. Alternativ kann die Lichtquelle so relativ zur Bildaufnahmeeinheit angeordnet sein, dass ein Schatten der Bildaufnahmeeinheit bzw. von deren Gehäuse oder einer Ausformung an deren Gehäuse auf das Hindernis projiziert wird.

In einer bevorzugten Ausgestaltung ist das Erfassungsmittel manuell oder in Abhängigkeit von der Fahrsituation, beispielsweise während einem Einpark- oder Rangiervorgang des Fahrzeugs, aktivierbar. Somit wird der Fahrer nur in bestimmten und kritischen Fahrsituationen auf die Bildaufnahmeeinheit aufmerksam gemacht, so dass er in Fahrsituationen, in denen er nicht unbedingt auf die Bildaufnahmeeinheit aufmerksam gemacht werden soll, nicht durch das Erfassungsmittel abgelenkt wird.

Vorzugsweise weist die Bildaufnahmeeinheit eine Kamera und/oder einen Bildsensor auf.

Nachfolgend wird die Erfindung beispielhaft anhand der beigefügten Figuren beschrieben in denen:
- Fig. 1: eine schematische Darstellung einer Anzeigeeinrichtung zeigt;
- Fig. 2: eine schematische Darstellung einer an einem Fahrzeug, insbesondere Nutzfahrzeug, angebrachten Anzeigeeinrichtung mit einem Erfassungsmittel zeigt;
- Fig. 3: eine schematische Darstellung einer an einem Fahrzeug, insbesondere Nutzfahrzeug, angebrachten Anzeigeeinrichtung mit einem alternativen Erfassungsmittel zeigt;
- Fig. 4: eine schematische Darstellung der an einem Fahrzeug, insbesondere Nutzfahrzeug, angebrachten Anzeigeeinrichtung der Fig. 3 zeigt, bei dem das Erfassungsmittel an einer alternativen Position angeordnet ist;
- Fig. 5: eine schematische Darstellung eines von dem Erfassungsmittel erfassten und auf der Wiedergabeeinheit dargestellten Bilds der Fahrzeugumgebung darstellt;
- Fig. 6: eine schematische Darstellung eines von der Bildaufnahmeeinheit erfassten und auf der Wiedergabeeinheit dargestellten Bilds der Fahrzeugumgebung darstellt;
- Fig. 7: eine schematische Darstellung einer an einem Fahrzeug, insbesondere Nutzfahrzeug, angebrachten Anzeigeeinrichtung mit einem alternativen Erfassungsmittel zeigt;
- Fig. 8: eine schematische Darstellung einer an einem Fahrzeug, insbesondere Nutzfahrzeug, angebrachten Anzeigeeinrichtung mit einem alternativen Erfassungsmittel zeigt;
- Fig. 9: eine schematische Darstellung einer an einem Fahrzeug, insbesondere Nutzfahrzeug, angebrachten Anzeigeeinrichtung mit einem alternativen Erfassungsmittel.

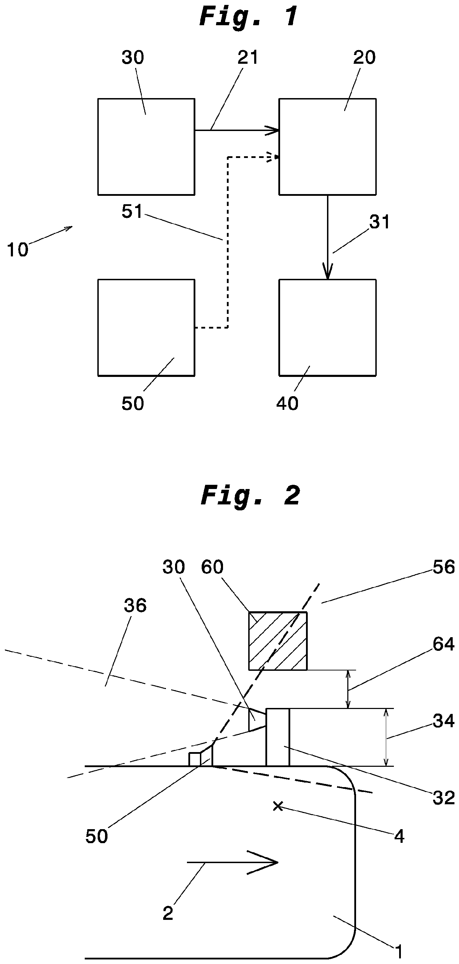

Die Fig. 1 zeigt schematisch eine Anzeigeeinrichtung 10. Die Anzeigeeinrichtung 10, die beispielsweise an einem Nutzfahrzeug wie einem Lastkraftwagen verwendet werden kann, umfasst wenigstens eine Bildaufnahmeeinheit 30, eine Verarbeitungseinheit 20, eine Wiedergabeeinheit 40 und ein Erfassungsmittel 50. Die von der Aufnahmeeinheit 30 erfassten Bilder werden der Verarbeitungseinheit 20 über eine erste Verbindung 21, beispielsweise ein geeignetes Datenkabel zur digitalen Übertragung der von der Verarbeitungseinheit 30 erfassten Bilder, bereitgestellt. Die Verarbeitungseinheit 20 kann dazu ausgebildet sein, die erfassten Bilder zu einem Wiedergabebild in einer gewünschten Weise zu modifizieren. Beispielsweise kann die Verarbeitungseinheit 20 ein von der Bildaufnahmeeinheit 30 empfangenes Bild dahingehend bearbeiten, dass bestimmte Verkehrsobjekte in dem Bild erkannt und gekennzeichnet werden. Das von der Verarbeitungseinheit 20 modifizierte Wiedergabebild wird dann der Wiedergabeeinheit 40 über eine zweite Verbindung 31, beispielsweise ein geeignetes Datenkabel zur digitalen Übertragung von Bildern, bereitgestellt. Die Wiedergabeeinheit 40 ist dazu angepasst, das Wiedergabebild einem Fahrer des Nutzfahrzeugs 50 einsehbar fotorealistisch darzustellen.

Die Verarbeitungseinheit 20 muss nicht zwingend eine Bearbeitung des von der Bildaufnahmeeinheit 30 erfassten Bildes durchführen. In manchen Ausführungsformen ist die Verarbeitungseinheit 20 dazu ausgebildet, das von der Bildaufnahmeeinheit 30 erfasste Bild unverändert als Wiedergabebild der Wiedergabeeinheit 40 bereitzustellen.

Wie in der Fig. 1 gezeigt, weist die Anzeigeeinrichtung 10 ein Erfassungsmittel 50 auf, das über eine dritte Verbindung 51, beispielsweise ein geeignetes Datenkabel zur digitalen Übertragung von Daten, mit der Verarbeitungseinheit 20 verbunden sein kann. Das Erfassungsmittel 50 ist dazu angepasst, dem Fahrer des Fahrzeugs zu ermöglichen, die Position der Bildaufnahmeeinheit 30 relativ zur Fahrzeugumgebung zu erkennen.

Die Fig. 2 zeigt schematisch die Anzeigeeinrichtung 10 der Fig. 1, die an einem Fahrzeug 1 angebracht ist, in Draufsicht. In der Fig. 2 ist gezeigt, dass die Bildaufnahmeeinheit 20, beispielsweise eine Kamera, am Fahrzeug 1 in einem vom Fahrzeug 1 nach außen vorstehenden Gehäuse 32 angeordnet ist. In dem dargestellten Beispiel erstreckt sich das Gehäuse 32 von der Fahrerseite des Fahrzeug 1 mit einer Entfernung 34. Die Bildaufnahmeeinheit 30 ist vorzugsweise an einem äußeren Bereich des Gehäuses 32 angebracht und derart ausgerichtet, dass diese einen Sichtbereich 36 erfasst, der sich im Wesentlichen entgegen einer Vorwärtsfahrtrichtung 2 des Fahrzeugs 1 von vorne nach hinten erstreckt, und im Wesentlichen hinter einem Augpunkt 4 des Fahrers des Fahrzeugs 1 angebracht ist. Außerdem ist in der Fig. 2 schematisch ein Hindernis 60, beispielsweise ein Baum, für die Bildaufnahmeeinheit 30 gezeigt, das mit einer Entfernung 64 vom äußeren Ende des Gehäuses 32 beabstandet ist.

In dem in der Fig. 2 gezeigte Beispiel ist das Erfassungsmittel eine Kameraeinrichtung 50, die von der Bildaufnahmeeinheit 30 räumlich getrennt am Fahrzeug 1 angebracht ist. Die Kameraeinrichtung 50 ist in Vorwärtsfahrtrichtung 2 hinter der Bildaufnahmeeinheit 30 am Fahrzeug 1 angebracht und derart ausgerichtet, dass diese einen Sichtbereich 56 erfasst, der sich im Wesentlichen in der Vorwärtsfahrtrichtung 2 des Fahrzeugs 1 erstreckt und die Bildaufnahmeeinheit 30 zumindest teilweise erfasst. Die von der Kameraeinheit 50 aufgenommene Bildinformation kann zur Verarbeitung und Darstellung an die Verarbeitungseinheit 20 und die vom Fahrer des Fahrzeugs 1 einsehbare Wiedergabeeinheit 40 übermittelt werden. Anstelle einer Kameraeinrichtung 50 kann das Erfassungsmittel eine Spiegeleinrichtung aufweisen, über die der Fahrer des Fahrzeugs 1 die Bildaufnahmeeinheit 30 betrachten und überwachen kann.

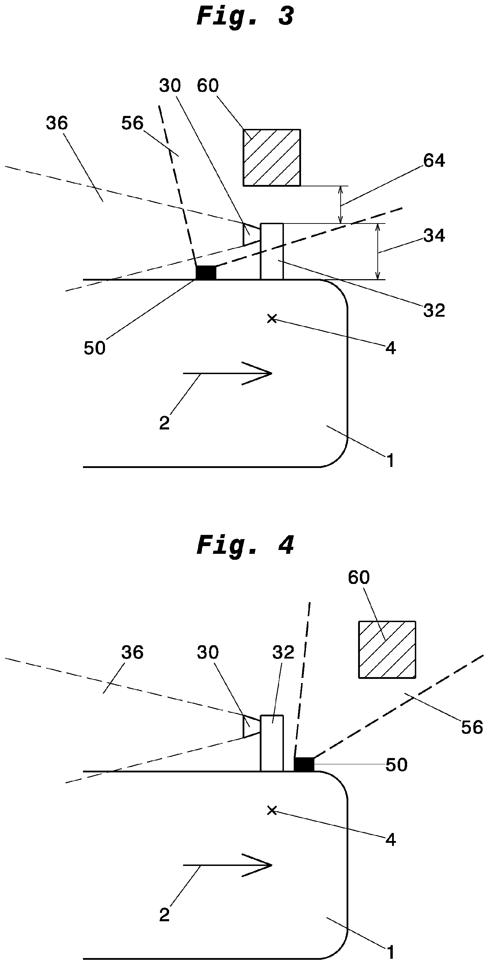

Die Fig. 3 zeigt die Anzeigeeinrichtung 10 der Fig. 2 mit einem andersartig ausgerichteten Erfassungsmittel 50. Wie gezeigt, ist das als Kameraeinrichtung ausgebildete Erfassungsmittel 50 in der Fig. 3 derart am Fahrzeugs 1 angebracht, dass sich der vom Erfassungsmittel 50 erfasste Sichtbereich 56 im Wesentlichen senkrecht zur Vorwärtsfahrtrichtung 2 erstreckt, wobei der Sichtbereich 56 zumindest teilweise die Bildaufnahmeeinheit 30 bzw. das zugehörige vorstehende Gehäuse 32 erfasst.

Alternativ kann das Erfassungsmittel 50 ein entsprechend angeordneter Sensor sein, wie beispielsweise ein Radar- oder Infrarotsensor, der dazu angepasst ist, Entfernungsinformation zwischen dem Fahrzeug 1 und dem Hindernis 60 zu erfassen und der Verarbeitungseinheit 20 bereitzustellen. In dem in der Fig. 3 gezeigten Beispiel ist das Erfassungsmittel 40 relativ zur Vorwärtsfahrtrichtung 2 hinter der Bildaufnahmeeinheit 30 am Fahrzeug 1 angebracht, wohingegen in dem in der Fig. 4 gezeigten Beispiel zur Erklärung der Erfindung das Erfassungsmittel 50, wie z. B. ein Radar- oder Infrarotsensor, relativ zur Vorwärtsfahrtrichtung 2 vor der Bildaufnahmeeinheit 30 am Fahrzeug 1 angebracht ist. Das Erfassungsmittel 50 ist jeweils räumlich getrennt von der Bildaufnahmeeinheit 30 am Fahrzeug 1 derart angebracht, dass ein Bereich 56 neben dem Fahrzeug 1 wird.

Die Verarbeitungseinheit 20 ist dazu angepasst, unter Kenntnis der Entfernung 34 und auf Basis der Entfernungsinformation des Sensors 50 eine Entfernung 64 zwischen dem äußeren Ende des Gehäuses 32 und dem Hindernis 60 zu bestimmen und dem Fahrer des Fahrzeugs 1 einen entsprechenden Hinweis zu übermitteln, beispielsweise in optischer, akustischer und/oder haptischer Form.

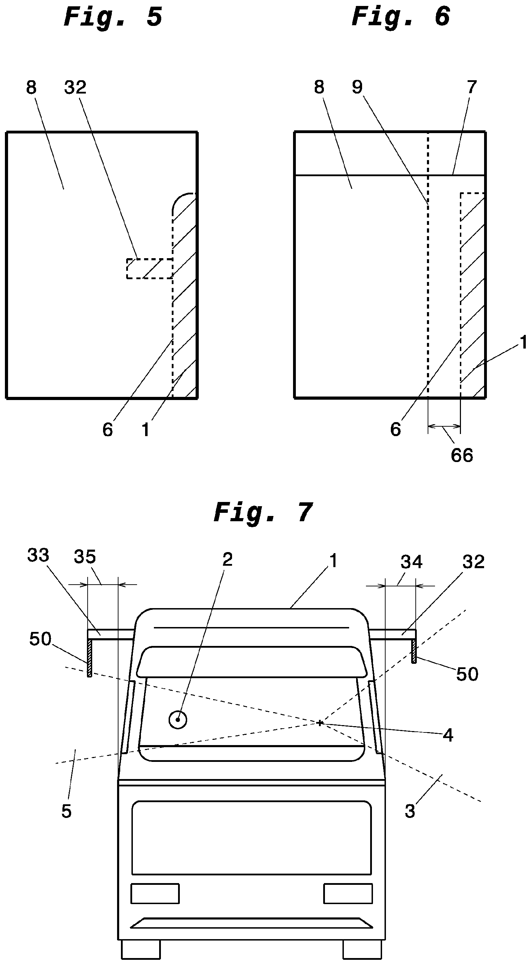

Die Fig. 5 zeigt schematisch ein auf der Wiedergabeeinheit 40 dargestelltes Wiedergabebild, das von dem Erfassungsmittel 50, beispielsweise der Kameraeinrichtung der Fig. 2, erfasst wurde. Gemäß dem Wiedergabebild der Fig. 5 ist die Kameraeinrichtung 50 derart am Fahrzeug angebracht, dass im Wesentlichen eine Draufsicht auf eine Fahrbahn 8 erfasst wird. Die Verarbeitungseinheit 20 ist dazu angepasst, in das Wiedergabebild der Fig. 5 einen Fahrzeugbezug 6 einblenden. Zusätzlich ist die Verarbeitungseinheit 20 dazu angepasst, das vom Fahrzeug 1 vorstehende Gehäuse 32 im Wiedergabebild schematisch einzublenden. Alternativ oder zusätzliche ist es möglich, dass die Kameraeinrichtung 50 zumindest einen Teil des Fahrzeugs 1 und/oder das Gehäuse 32 erfasst und somit im Wiedergabebild enthalten sind, damit sich der Fahrer des Fahrzeugs schnell auf dem Wiedergabebild orientieren kann.

Unter Verweis auf die Fig. 6 ist schematisch ein auf der Wiedergabeeinheit 40 dargestelltes Wiedergabebild dargestellt, das von der Bildaufnahmeeinheit 30 erfasst wurde und somit im Wesentlichen eine Sicht nach hinten zeigt, beispielsweise ist in der Fig. 6 der Horizont 7 sichtbar. Die Verarbeitungseinheit 20 kann zusätzlich dazu angepasst sein, in das Wiedergabebild eine Linie 9, beispielsweise gestrichelt, gepunktet oder durchgezogen, einzublenden, die unter einem Abstand 66 vom ebenfalls durch die Verarbeitungseinheit 20 eingeblendeten Fahrzeugbezug 6 angeordnet ist. Der Abstand 66 soll dem Fahrer qualitativ die Entfernung 34 zwischen dem äußeren Ende des Gehäuses 32 und dem Fahrzeug 1 anzeigen, so dass sich dieser bei Rangiervorgängen an der Linie 9 orientieren kann und nicht versehentlich das Gehäuse 32, in dem die Bildaufnahmeeinheit 30 angeordnet ist, übersieht und mit dem Hindernis 60 kollidiert.

Die Fig. 7 zeigt schematisch eine Frontansicht eines Fahrzeugs 1, insbesondere Nutzfahrzeugs. Am Fahrzeug 1 der Fig. 7 befindet sich auf der Fahrerseite das mit der Entfernung 34 vom Fahrzeug 1 vorstehende Gehäuse 32, in dem die Bildaufnahmeeinheit 30 (in der Fig. 7 nicht explizit dargestellt) angeordnet ist. In ähnlicher Weise befindet sich auf der Beifahrerseite ein mit einer Entfernung 35 vom Fahrzeug 1 vorstehendes Gehäuse 33, in dem eine weitere Bildaufnahmeeinheit (in der Fig. 7 nicht explizit dargestellt) angeordnet ist.

In der Fig. 7 sind ferner Sichtbereiche 3 und 5 des Fahrers des Fahrzeugs 1 eingezeichnet, die der Fahrer vom Augpunkt 4 aus seitlich neben dem Fahrzeug 1 erfassen kann. Wie dargestellt, ist die Position des Augpunkts 4 relativ zur Fahrzeugmitte beabstandet, weshalb die Sichtbereiche 3 und 5 relativ zur Fahrzeugmitte asymmetrisch sind. Das heißt, dass der Fahrer einen größeren Sichtbereich 3 auf der Fahrerseite erfassen kann als auf der Beifahrerseite (Sichtbereich 5).

Aufgrund der hohen Anbringung der beiden Gehäuse 32, 33 am Fahrzeug 1, kann der Fahrer des Fahrzeugs 1 die beiden Gehäuse 32, 34 nicht direkt mit seinen Sichtbereichen 3, 5 erfassen. Deshalb ist an jedem Gehäuse 32, 33 jeweils ein Erfassungsmittel 50 in Form von Hinweisbauteilen, beispielsweise sich nach unten erstreckende Finnen, angebracht, die dazu angepasst sind, zumindest teilweise in den jeweiligen Sichtbereich 3, 5 zu ragen und somit dem Fahrer zu ermöglichen, die Position der Bildaufnahmeeinheit 30 relativ zur Fahrzeugumgebung zu erkennen. Bevorzugt sind die Hinweisbauteile 50 am äußersten Ende des jeweiligen Gehäuses 3, 5 angebracht.

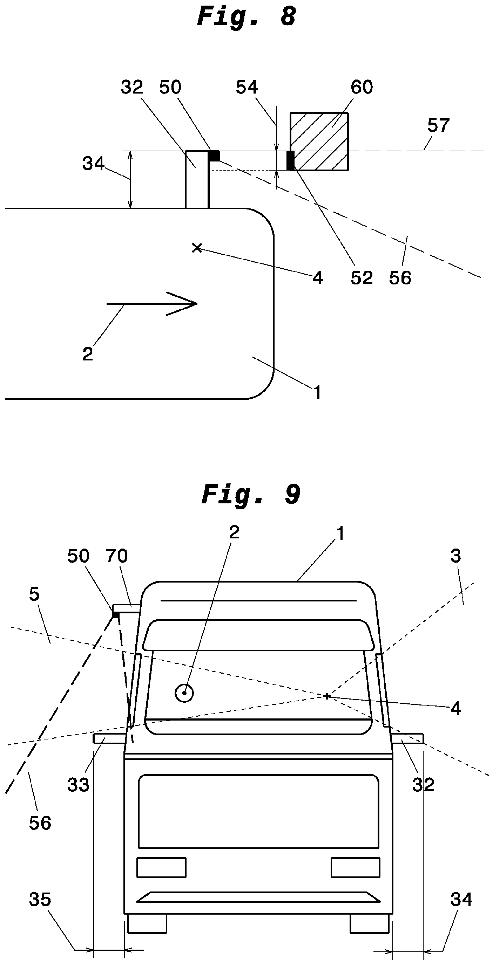

Die Fig. 8 zeigt eine weitere Anzeigeeinrichtung 10 mit einem alternativen Erfassungsmittel 50. Das Erfassungsmittel 50 ist dabei eine am Gehäuse 32 angebrachte Lichtquelle, die dazu angepasst ist, einen Lichtkegel 56 im Wesentlichen in Vorwärtsfahrtrichtung 2 auszusenden. Der Lichtkegel 56 ist derart ausgerichtet, dass dessen äußere Begrenzung 57 im Wesentlichen parallel zur Vorwärtsfahrtrichtung 2 verläuft und mit dem äußeren Ende des Gehäuses 32 fluchtet. Somit zeigt die äußere Begrenzung des Lichtkegels 56 die äußere Begrenzung des Gehäuses 32 an.

Trifft der Lichtkegel 56 auf ein Hindernis 60 für die Bildaufnahmeeinheit 30, die im Gehäuse 32 angeordnet ist, ergibt sich auf dem Hindernis 60 eine projizierte Fläche 52, die eine Breite 54 aufweist. Die Breite 54 zeigt dem Fahrer die Information an, dass das Gehäuse 32 noch eine entsprechende Überlappungsbreite mit dem Hindernis 60 hat und somit das Gehäuse 32 und bei Weiterfahrt mit dem Hindernis 60 kollidieren würde. Trifft der Lichtkegel 56 nicht auf ein Hindernis 60, so kann der Fahrer daran erkennen, dass keine Kollisionsgefahr des Gehäuses 32 mit dem Hindernis 60 besteht.

Die Fig. 9 zeigt schematisch eine Frontansicht eines Fahrzeugs 1, insbesondere Nutzfahrzeugs. Am Fahrzeug 1 der Fig. 9 befindet sich auf der Fahrerseite das mit der Entfernung 34 vom Fahrzeug 1 vorstehende Gehäuse 32, in dem die Bildaufnahmeeinheit 30 (in der Fig. 7 nicht explizit dargestellt) angeordnet ist. In ähnlicher Weise befindet sich auf der Beifahrerseite ein mit einer Entfernung 35 vom Fahrzeug 1 vorstehendes Gehäuse 33, in dem eine weitere Bildaufnahmeeinheit (in der Fig. 7 nicht explizit dargestellt) angeordnet ist. Die Gehäuse 32, 33 in dem in der Fig. 9 gezeigten Beispiel sind, im Gegensatz zur Fig. 7, unterhalb des Augpunkts 4 am Fahrzeug 1 angebracht.

In der Fig. 9 sind ferner die Sichtbereiche 3 und 5 des Fahrers des Fahrzeugs 1 eingezeichnet, die der Fahrer vom Augpunkt 4 aus seitlich neben dem Fahrzeug 1 erfassen kann. Wie dargestellt, ist die Position des Augpunkts 4 zur Fahrzeugmitte beabstandet, weshalb die Sichtbereiche 3 und 5 relativ zur Fahrzeugmitte asymmetrisch sind. Das heißt, dass der Fahrer einen größeren Sichtbereich 3 auf der Fahrerseite erfassen kann als auf der Beifahrerseite (Sichtbereich 5).

Aufgrund der niedrigen Anbringung der beiden Gehäuse 32, 33 am Fahrzeug 1 und der asymmetrischen Sitzposition des Fahrers des Fahrzeug 1 relativ zur Fahrzeugmitte, kann der Fahrer des Fahrzeugs 1 zwar das Gehäuse 32 auf der Fahrerseite mit seinem Sichtbereich 3 erfassen, jedoch kann der Fahrer des Fahrzeugs 1 das auf der Beifahrerseite angebrachte Gehäuse 34 nicht direkt mit seinem Sichtbereich 5 erfassen. Deshalb ist in der Ausgestaltung der Fig. 9 ein Erfassungsmittel 50 in einem sich vom Fahrzeug 1 nach außen erstreckenden Gehäuse 70 am Fahrzeug 1 vorgesehen. Das Gehäuse 70 ist beispielsweise oberhalb des Gehäuses 33 und oberhalb des Augpunkts 4 an der Beifahrerseite des Fahrzeugs 1 angebracht. Das Erfassungsmittel 50 ist in der Ausgestaltung der Fig. 9 beispielsweise eine Kameraeinrichtung, die im Gehäuse 70 derart ausgerichtet ist, dass diese einen sich im Wesentlichen vertikal nach unten erstreckenden Sichtbereich 56 erfasst, in dem sich das Gehäuse 33, in dem eine Bildaufnahmeeinheit 30 angeordnet ist, befindet. Mit Hilfe des Erfassungsmittels 70 kann der Fahrer des Fahrzeugs 1 das Gehäuse 33 und die darin angeordnete Bildaufnahmeeinheit 30 zuverlässig überwachen und bei Rangier- und Abbiegevorgängen berücksichtigen.

Das in der Fig. 9 als Kameraeinrichtung ausgebildete Erfassungsmittel 50 kann neben der Überwachung des auf der Beifahrerseite angeordneten Gehäuses 33 zusätzlich dazu ausgebildet sein, ein gesetzlich vorgeschriebenes Sichtfeld zumindest teilweise zu erfassen. Beispielsweise kann die Kameraeinrichtung 50 zusätzlich das Sichtfeld eines Rampenspiegels (Sichtfeld V gemäß ECE Richtlinie R 46) und/oder das Sichtfeld eines Frontspiegels (Sichtfeld VI gemäß ECE Richtlinie R 46) zumindest teilweise erfassen.

### Bezugszeichenliste

- 1: Fahrzeug
- 2: Vorwärtsfahrtrichtung
- 3: Sichtbereich des Fahrers des Fahrzeugs
- 4: Augpunkt
- 5: Sichtbereich des Fahrers des Fahrzeugs
- 6: Fahrzeugbezug
- 7: Horizont
- 8: Fahrbahn
- 9: Linie
- 10: Anzeigeeinrichtung
- 20: Verarbeitungseinheit
- 21: erste Verbindung
- 30: Bildaufnahmeeinheit
- 31: zweite Verbindung
- 32: Gehäuse
- 33: Gehäuse
- 34: Entfernung
- 35: Entfernung
- 36: Sichtbereich der Bildaufnahmeeinheit
- 40: Wiedergabeeinheit
- 50: Erfassungsmittel
- 51: dritte Verbindung
- 52: projizierte Fläche
- 54: Entfernung
- 56: Sichtbereich/Lichtkegel des Erfassungsmittels
- 60: Hindernis
- 70: Gehäuse

## Patentansprüche

1. Anzeigeeinrichtung (10) für Fahrzeugumgebungsbereiche eines Fahrzeugs (1), mit:
mindestens einer Bildaufnahmeeinheit (30), die am Fahrzeug (1) in einem vom Fahrzeug (1) nach außen vorstehenden Gehäuse (32, 33) angeordnet ist,
einer Verarbeitungseinheit (20),
einer Wiedergabeeinheit (40), die durch die Bildaufnahmeeinheit (30) erfasste Fahrzeugumgebungsinformation für den Fahrer des Fahrzeugs (1) bereitstellt und ausgibt, und
einem Erfassungsmittel (50), das die Position der Bildaufnahmeeinheit (30) und des Gehäuses (32, 33) erfasst, um dem Fahrer zu ermöglichen, die Position der Bildaufnahmeeinheit (30) und des Gehäuses (32, 33) relativ zur Fahrzeugumgebung zu erkennen.

2. Anzeigeeinrichtung (10) nach Anspruch 1, wobei die Bildaufnahmeeinheit (30) in einem von einer Fahrzeugseite, insbesondere seitlich, vorstehenden Gehäuse (32, 33) angeordnet ist, und/oder das Erfassungsmittel (50) von der Bildaufnahmeeinheit (30) räumlich getrennt außen am Fahrzeug (1) angeordnet ist.

3. Anzeigeeinrichtung (10) nach Anspruch 2, wobei das Erfassungsmittel (50) eine Einrichtung zur indirekten Sicht aufweist, die ein vom Fahrer des Fahrzeugs (1) einsehbares Bild der Bildaufnahmeeinheit (30) und deren unmittelbarer Umgebung erfasst.

4. Anzeigeeinrichtung (10) nach Anspruch 3, wobei die Einrichtung zur indirekten Sicht eine Kameraeinrichtung und/oder eine Spiegeleinrichtung ist.

5. Anzeigeeinrichtung (10) nach einem der Ansprüche 3 oder 4, wobei das Fahrzeug ein Nutzfahrzeug (1) ist und die Einrichtung zur indirekten Sicht ein gesetzlich vorgeschriebenes Sichtfeld rund um ein Nutzfahrzeug (1) zumindest teilweise erfasst.

6. Anzeigeeinrichtung (10) nach Anspruch 4 oder 5, wobei die Einrichtung zur indirekten Sicht eine Kameraeinrichtung (50) ist und die von der Kameraeinrichtung (50) aufgenommene Bildinformation zur Verarbeitung und Darstellung an die Verarbeitungseinheit (20) und die vom Fahrer des Fahrzeugs einsehbare Wiedergabeeinheit (40) übermittelt wird.

7. Anzeigeeinrichtung (10) nach einem der vorhergehenden Ansprüche, wobei die das Bild der Kameraeinrichtung (50) verarbeitende Verarbeitungseinheit (20) angepasst ist, einen Fahrzeugbezug in das auf der Wiedergabeeinheit (40) angezeigte und die Bildaufnahmeeinheit (30) enthaltende Bild zu überblenden, und/oder die Verarbeitungseinheit (20) angepasst ist, für den Fahrer ein Bild der Fahrzeugumgebung auf der Wiedergabeeinheit (40) darzustellen und das Erfassungsmittel (50) und/oder die Verarbeitungseinheit (20) angepasst ist, in das dargestellte Bild eine die Position der Bildaufnahmeeinheit (30) anzeigende Markierung einzublenden.

8. Anzeigeeinrichtung (10) nach einem der vorhergehenden Ansprüche, wobei das Erfassungsmittel (50) dazu ausgebildet ist, Entfernungsinformation zwischen der Bildaufnahmeeinheit (30) und einem in der Fahrzeugumgebung befindlichen Hindernis (60) für die Bildaufnahmeeinheit (30) zu erfassen und an die Fahrzeugsteuerung zu liefern.

9. Anzeigeeinrichtung (10) nach Anspruch 8, wobei, wenn eine Entfernungsinformation geliefert wird, die ein Hindernis (60) anzeigt, die Verarbeitungseinheit (20) angepasst ist, an die Fahrzeugsteuerung ein Signal zu übermitteln, das die Fahrzeugsteuerung dazu veranlasst, mittels eines Fahrerassistenzsystems in die Fahrparameter des Fahrzeuges (1) einzugreifen.

10. Anzeigeeinrichtung (10) nach Anspruch 8 oder 9, wobei das Erfassungsmittel einen Sensor (50) enthält, der dazu ausgebildet ist, Entfernungsinformation zwischen der Bildaufnahmeeinheit (30) und einem in der Fahrzeugumgebung befindlichen Hindernis (60) für die Bildaufnahmeeinheit (30) zu erfassen und an die Fahrzeugsteuerung zu liefern.

11. Anzeigeeinrichtung (10) nach Anspruch 1 oder 2, wobei das Erfassungsmittel ein an der Bildaufnahmeeinheit (30) und/oder in definierter geometrischer Beziehung zur Bildaufnahmeeinheit (30) angebrachtes Hinweisbauteil (50) ist, das vom Fahrer des Fahrzeugs (1) einsehbar ist, wobei das Hinweisbauteil (50) insbesondere ein Winglet, ein Vorsprung und/oder eine Finne ist.

12. Anzeigeeinrichtung (10) nach Anspruch 1 oder 2, wobei das Erfassungsmittel eine derart relativ zur Bildaufnahmeeinheit (30) platzierte Lichtquelle (50) ist, die dazu ausgebildet ist, eine Markierung auf ein Hindernis (60) für die Bildaufhahmeeinheit (30) in der Fahrzeugumgebung zu projizieren, die dem Fahrer des Fahrzeugs (1) eine Abschätzung der Position der Bildaufnahmeeinheit (30) relativ zum Hindernis (60) ermöglicht.

13. Anzeigeeinrichtung (10) nach einem der vorhergehenden Ansprüche, wobei das Erfassungsmittel (50) manuell und/oder in Abhängigkeit von der Fahrsituation aktivierbar ist.

14. Anzeigeeinrichtung (10) nach einem der vorhergehenden Ansprüche, wobei die Bildaufnahmeeinheit (30) eine Kamera und/oder einen Bildsensor enthält.

15. Anzeigeeinrichtung (10) nach einem der vorhergehenden Ansprüche, wobei die Bildaufnahmeeinheit (30) ein gesetzlich vorgeschriebenes Sichtfeld rund um ein Nutzfahrzeug (1) zumindest teilweise erfasst.

## Claims

1. A display system (10) for environment regions of a vehicle (1), comprising:
at least an image capturing unit (30) arranged at the vehicle (1) in a housing (32, 33) outwardly protruding from the vehicle (1),
a processing unit (20),
a display unit (40) providing and outputting vehicle environment information captured by the image capturing unit (30) to the driver, and
a capturing means (50) for capturing the position of the image capturing unit (30) and of the housing (32, 33) enabling the driver to identify the position of the image capturing unit (30) and of the housing (32, 33) with regard to the vehicle environment.

2. The display system (10) according to claim 1, wherein the image capturing unit (30) is arranged in a housing (32, 33), which protrudes, substantially laterally, from a vehicle side, and/or wherein the capturing means (50) is arranged at a spatial distance from the image capturing unit (30) on the outside of the vehicle (1).

3. The display system (10) according to claim 2, wherein the capturing means (50) comprises a system for indirect view, configured to capture an image of the image capturing unit (30) and the immediate environment thereof, which is visible for the driver of the vehicle (1),

4. The display system (10) according to claim 3, wherein the system for indirect view is a camera system and/or a mirror system.

5. The display system (10) according to claim 3 or 4, wherein the vehicle is a commercial vehicle (1) and the system for indirect view at least partially captures a legally prescribed field of view around a commercial vehicle (1).

6. The display system (10) according to claim 4 or 5, wherein the system for indirect view is a camera system (50), and for processing and displaying, the image information captured by the camera system (50) is transmitted to the processing unit (20) and the display unit (40), which is visible for the driver of the vehicle.

7. The display system (10) according to claim 1, wherein the processing unit (20) processing the image captured by the camera unit (50) is adapted to superimpose a vehicle reference on the image displayed on the display unit (40) and comprising the image capturing unit (30), and/or the processing unit (20) is adapted to provide the driver with an image of the vehicle environment on the display unit (40), and wherein the capturing means (50) and/or the processing unit (20) is/are adapted to superimpose a marking indicating the position of the image capturing unit (30) on the displayed image.

8. The display system (10) according to any one of the preceding claims, wherein the capturing means (50) is adapted to capture distance information between the image capturing unit (30) and an obstacle (60) for the image capturing unit (30) located in the vehicle environment, and to supply this information to the vehicle control system.

9. The display system (10) according to claim 8, wherein, if a distance information indicating an obstacle (60) is provided, the processing unit (20) is adapted to transmit a signal to the vehicle control system causing the vehicle control system to intervene in driving parameters of the vehicle (1) by means of a driver assistance system.

10. The display system (10) according to claim 8 or 9, wherein the capturing means comprises a sensor (50) adapted to capture distance information between the image capturing unit (30) and an obstacle (60) for the image capturing unit (30) located in the vehicle environment, and to supply this information to the vehicle control system.

11. The display system (10) according to claim 1 or 2, wherein the capturing means is an indication component (50) visibly for the driver of the vehicle (1) fixed at the image capturing unit (30) and/or at a defined geometric relation with regard to the image capturing unit (30), wherein the indication component (50) is in particular a winglet, a protrusion and/or a fin.

12. The display system (10) according to claim 1 or 2, wherein the capturing means is a light source (50) positioned such with respect to the image capturing unit (30), that it is adapted to project a marking on an obstacle (60) for the image capturing unit (30) in the vehicle environment, for enabling the driver of the vehicle (1) to estimate the position of the image capturing unit (30) with regard to the obstacle (60).

13. The display system (10) according to any one of the preceding claims, wherein the capturing means (50) can be activated manually and/or dependent on the driving situation.

14. The display system (10) according to any one of the preceding claims, wherein the image capturing unit (30) comprises a camera and/or an image sensor.

15. The display system (10) according to any one of the preceding claims, wherein the image capturing unit (30) at least partially captures a legally prescribed field of view around a commercial vehicle (1).

## Revendications

1. Appareil d'affichage (10) pour des zones de l'environnement de véhicule d'un véhicule (1), avec :
au moins une unité de prise de vue (30), qui est agencée au niveau du véhicule (1) dans un boîtier (32, 33) en saillie vers extérieur du véhicule (1),
une unité de traitement (20),
une unité de restitution (40), qui met à disposition et délivre l'information de l'environnement de véhicule détectée par l'unité de prise de vue (30) pour le conducteur du véhicule (1), et
un moyen de détection (50), qui détecte la position de l'unité de prise de vue (30) et du boîtier (32, 33), afin de permettre au conducteur de détecter la position de l'unité de prise de vue (30) et du boîtier (32, 33) par rapport à l'environnement de véhicule.

2. Appareil d'affichage (10) selon la revendication 1, dans lequel l'unité de prise de vue (30) est agencée dans un boîtier (32, 33) en saillie, en particulièrement latéralement, d'un côté de véhicule, et/ou le moyen de détection (50) est agencé à l'extérieur du véhicule (1) séparé spatialement de l'unité de prise de vue (30).

3. Appareil d'affichage (10) selon la revendication 2, dans lequel le moyen de détection (50) présente un appareil pour la vue indirecte, qui détecte une image visible par le conducteur du véhicule (1) de l'unité de prise de vue (30) et de son environnement direct.

4. Appareil d'affichage (10) selon la revendication 3, dans lequel l'appareil pour la vue indirecte est un appareil de caméra et/ou un appareil miroir.

5. Appareil d'affichage (10) selon l'une quelconque des revendications 3 ou 4, dans lequel le véhicule est un véhicule utilitaire (1) et l'appareil pour la vue indirecte détecte au moins en partie un champ de vision prescrit par la loi autour d'un véhicule utilitaire (1).

6. Appareil d'affichage (10) selon la revendication 4 ou 5, dans lequel l'appareil pour la vue indirecte est un appareil caméra (50) et l'information d'image enregistrée par l'appareil caméra (50) est transmise pour le traitement et la représentation à l'unité de traitement (20) et à l'unité de restitution (40) visible par le conducteur du véhicule.

7. Appareil d'affichage (10) selon l'une quelconque des revendications précédentes, dans lequel l'unité de traitement (20) traitant l'image de l'appareil caméra (50) est adaptée pour enchaîner une référence de véhicule dans l'image affichée sur l'unité de restitution (40) et contenant l'unité de prise de vue (30), et/ou l'unité de traitement (20) est adaptée pour représenter pour le véhicule une image de l'environnement de véhicule sur l'unité de restitution (40) et le moyen de détection (50) et/ou l'unité de traitement (20) est adapté pour afficher un marquage affichant la position de l'unité de prise de vue (30) dans l'image représentée.

8. Appareil d'affichage (10) selon l'une quelconque des revendications précédentes, dans lequel le moyen de détection (50) est réalisé pour détecter une information de distance entre l'unité de prise de vue (30) et un obstacle (60) se trouvant dans l'environnement de véhicule pour l'unité de prise de vue (30) et la fournir à la commande de véhicule.

9. Appareil d'affichage (10) selon la revendication 8, dans lequel, lorsqu'une information de distance qui affiche un obstacle (60) est fournie, l'unité de traitement (20) est adaptée pour transmettre un signal à la commande de véhicule, qui amène la commande de véhicule à intervenir dans les paramètres de conduite du véhicule (1) au moyen d'un système d'assistance au conducteur.

10. Appareil d'affichage (10) selon la revendication 8 ou 9, dans lequel lorsque le moyen de détection contient un capteur (50), qui est réalisé pour détecter une information de distance entre l'unité de prise de vue (30) et un obstacle (60) se trouvant dans l'environnement de véhicule pour l'unité de prise de vue (30) et la fournir à la commande de véhicule.

11. Appareil d'affichage (10) selon la revendication 1 ou 2, dans lequel le moyen de détection est un composant d'indication (50) monté au niveau de l'unité de prise de vue (30) et/ou selon un rapport géométrique défini par rapport à l'unité de prise de vue (30), qui est visible par le conducteur du véhicule (1), dans lequel le composant d'indication (50) est en particulier un winglet, une saillie et/ou un aileron.

12. Appareil d'affichage (10) selon la revendication 1 ou 2, dans lequel le moyen de détection est une source de lumière (50) placée de manière relative par rapport à l'unité de prise de vue (30), qui est réalisée pour projeter un marquage sur un obstacle (60) pour l'unité de prise de vue (30) dans l'environnement de véhicule, qui permet au conducteur du véhicule (1) d'estimer la position de l'unité de prise de vue (30) par rapport à l'obstacle (60).

13. Appareil d'affichage (10) selon l'une quelconque des revendications précédentes, dans lequel le moyen de détection (50) est activable manuellement et/ou en fonction de la situation de conduite.

14. Appareil d'affichage (10) selon l'une quelconque des revendications précédentes, dans lequel l'unité de prise de vue (30) contient une caméra et/ou un capteur d'image.

15. Appareil d'affichage (10) selon l'une quelconque des revendications précédentes, dans lequel l'unité de prise de vue (30) contient au moins en partie un champ de vision prescrit par la loi autour d'un véhicule utilitaire (1).
